(19) Europäisches Patentamt
European Patent Office
Office européen des brevets

(11) Veröffentlichungsnummer: **0 503 153 A1**

# (12) EUROPÄISCHE PATENTANMELDUNG

(21) Anmeldenummer: **91121566.3**

(51) Int. Cl.5: **C08K 5/523**, C08L 77/10

(22) Anmeldetag: **17.12.91**

(30) Priorität: **14.02.91 DE 4104430**

(43) Veröffentlichungstag der Anmeldung: **16.09.92 Patentblatt 92/38**

(84) Benannte Vertragsstaaten: **AT BE CH DE FR GB IT LI NL**

(71) Anmelder: **HÜLS AKTIENGESELLSCHAFT**
**Patentabteilung / PB 15 - Postfach 13 20**
**W-4370 Marl 1(DE)**

(72) Erfinder: **Poll, Günter, Dr.**
**Venusweg 9**
**W-4370 Marl(DE)**
Erfinder: **Finke, Jürgen, Dr.**
**Münsterlandstrasse 22**
**W-4370 Marl(DE)**
Erfinder: **Modler, Harald, Dr.**
**Hattinger Strasse 103**
**W-4630 Bochum(DE)**

## (54) Formmassen auf Basis eines thermoplastisch verarbeitbaren, aromatischen Polyamids.

(57) Es sollen Formmassen mit einer verbesserten Stabilität gegen Thermooxidation zur Verfügung gestellt werden.

Dies wurde dadurch erreicht, daß die Formmassen gegenüber Polyamiden chemisch inerte Verbindungen der allgemeinen Formel

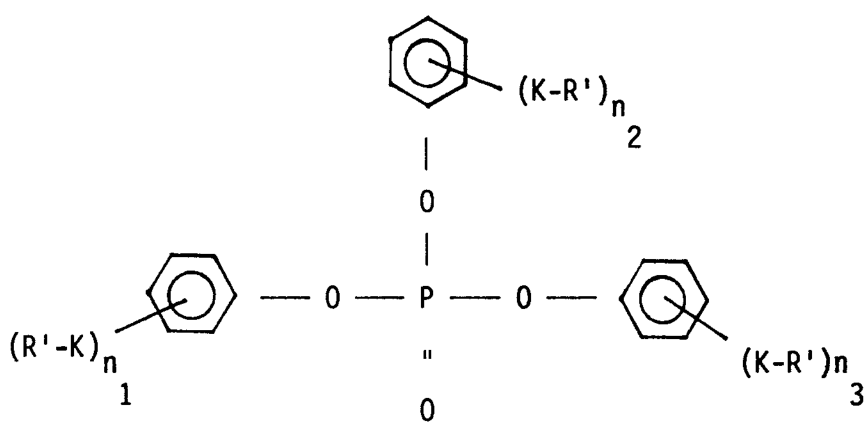

enthalten.

Die erfindungsgemäßen Formmassen weisen eine hervorragende Stabilität gegen Thermooxidation auf.

EP 0 503 153 A1

Gegenstand der Erfindung sind Formmassen auf Basis thermoplastisch verarbeitbarer, aromatischer Polyamide, erhalten durch Polykondensieren nachstehender Ausgangsmonomeren:

A. HOOC - Ar - COOH

B. $H_2N$ - Ar' - $NH_2$

hierbei bedeutet

Ar: 1.3- oder 1.4-Phenylen; 1.4-, 1.5-, 2.6- oder 2.7-Naphthylen,

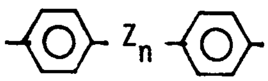

oder

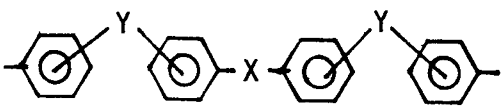 ;

Ar':

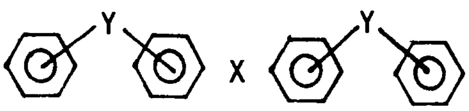 ;

X: -$SO_2$-; -CO-;
Y: -O-; -S-;
Z: -O-; -S-; -$SO_2$-; -CO-; -$CR_2$-;
R: -H; $C_1$ - $C_4$-Alkyl;
n: 0; 1;

in der Schmelze in Gegenwart eines Katalysators bei Temperaturen im Bereich von 200 bis 400 °C.

Die Herstellung der aromatischen Polyamide ist grundsätzlich bekannt (DE-OS 36 09 011). Ihre Schmelzviskosität ist allerdings erheblich.

Daher sind bei ihrer Verarbeitung sehr hohe Temperaturen erforderlich - im allgemeinen mindestens 350 °C. Bei diesen Temperaturen wird häufig eine Schädigung des Produkts beobachtet, erkennbar an Verfärbungen oder einer Verschlechterung der mechanischen Eigenschaften.

Aufgabe der Erfindung war es, Formmassen auf Basis aromatischer Polyamide zur Verfügung zu stellen, die die geschilderten Nachteile der Produkte des Standes der Technik nicht aufweisen.

Diese Aufgabe wurde dadurch gelöst, daß die Formmassen Verbindungen der allgemeinen Formel

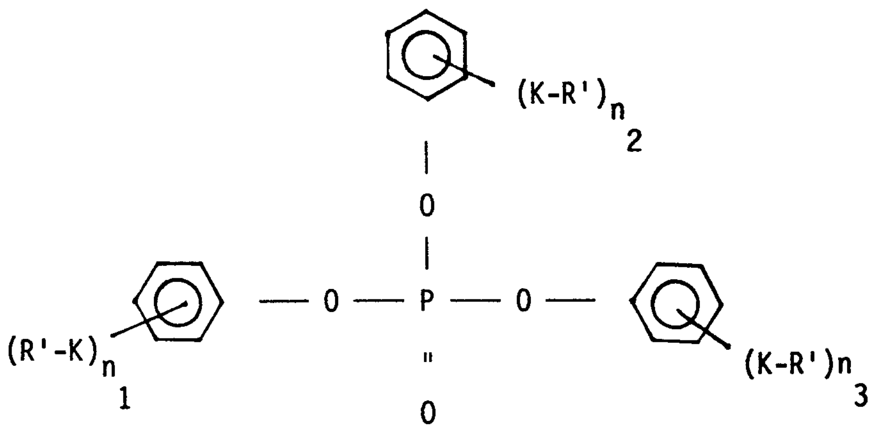

| | |
|---|---|
| K: | -S-; -SO-; $-SO_2-$;<br>-O-; -CO-; $-CR''_2-$; |
| R': | -H; $-C_pH_{2p-1}$; |

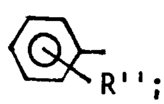 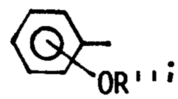

| | |
|---|---|
| R'': | -H; $-C_pH_{2p+1}$; |
| $n_1$, $n_2$, $n_3$: | 0; 1, wobei $n_1$ bis $n_3$ gleich oder verschieden sein können. |
| p: | 1 - 10 |

enthalten.

Geeignete erfindungsgemäße Verbindungen müssen

1) homogen in die Polyamidschmelze eingearbeitet werden können,

2) bei den für die aromatischen Polyamide typischen Verarbeitungstemperaturen stabil sein,

3) bei den Verarbeitungstemperaturen nicht bzw. kaum flüchtig sein,

4) gegenüber den aromatischen Polyamiden chemisch inert sein.

Diese Bedingungen werden z. B. von Triphenylphosphat, Diphenylkresylphosphat, Trikresylphosphat, Tris(nonylphenyl)phosphat o. ä. erfüllt. Eine bevorzugte Verbindung ist z. B. Triphenylphosphat.

Die erfindungsgemäßen Verbindungen werden in einem Anteil eingearbeitet, daß sie in der Formmasse zu 0,5 bis 40 Gew.-%, vorzugsweise zu 2 bis 30 Gew.-%, enthalten sind.

Die Herstellung der Mischung kann bereits durch Zugabe dieser Verbindungen zu den Ausgangsmonomeren (-oligomeren) bei Beginn der (Poly)kondensation erfolgen. Die erfindungsgemäßen Verbindungen können aber auch erst nach Beendigung der Polykondensation in das geschmolzene Reaktionsprodukt eingearbeitet werden.

Als aromatische Dicarbonsäuren (Komponente A.) kommen Isophthalsäure, Terephthalsäure, 1.4-, 1.5-, 2.6-, 2.7-Naphthalindicarbonsäure, 4.4'-Diphenyletherdicarbonsäure oder 4.4'-Benzophenondicarbonsäure, 4.4'-Diphenylsulfondicarbonsäure, 2-Phenoxyterephthalsäure, 4.4'-Biphenyldicarbonsäure oder Gemische davon in Frage.

Bevorzugt als Komponente A. wird Isophthalsäure allein oder ein Gemisch von Isophthalsäure mit einer weiteren der oben genannten Säuren eingesetzt. Im letzteren Fall werden bis zu 45 Mol-% Isophthalsäure ersetzt.

Als aromatische Diamine (Komponente B.) kommen z. B. 4.4'-Bis(4-aminophenoxy)diphenylsulfon, 4.4'-Bis(3-aminophenoxy)diphenylsulfon, 4.4'- Bis(4-aminophenoxy)benzophenon, 4.4'-Bis(3-aminophenoxy)-benzophenon, 4.4'-Bis(p-aminophenylmercapto)benzophenon, 4.4'-Bis(p-aminophenylmercapto)-diphenylsulfon oder Gemische davon in Frage.

Bevorzugt wird 4.4'-Bis(4-aminophenoxi)diphenylsulfon verwendet.

Das molare Einsatzverhältnis der Komponenten A. und B. bewegt sich im Bereich von etwa 1 : 1.

Die Glastemperatur ($T_g$) der aromatischen Polyamide liegt im Bereich von 190 bis 270 °C, die Viskositätszahlen (J-Werte) bei etwa 30 bis 100 $cm^3/g$; bevorzugt bei 60 bis 80 $cm^3/g$.

Um eine verbesserte Hydrolysebeständigkeit der Polyamide zu erreichen, können den aromatischen

Polyamiden noch 0,01 bis 10 Mol-% - bezogen auf die Summe der Komponenten A. und B. - eines niedermolekularen aliphatischen, araliphatischen oder aromatischen Carbonsäureamids zugesetzt werden. Hierbei kann der aromatische Rest durch Halogen oder durch $C_1$- bis $C_4$-Alkylreste substituiert sein. Diese Maßnahme wird in DE-OS 38 04 401 beschrieben.

Die Hydrolysebeständigkeit kann ebenfalls dadurch verbessert werden, indem die Komponente A. in geringem Überschuß eingesetzt (DE-OS 39 35 467) oder, falls A. und B. ungefähr äquimolar vorliegen, zusätzlich eine Monocarbonsäure zugegeben wird (DE-OS 39 35 468).

Die Herstellung der aromatischen Polyamide ist grundsätzlich bekannt. Sie wird u. a. in DE-OS 36 09 011 beschrieben.

Eine bevorzugte Arbeitsweise bei der Herstellung der aromatischen Polyamide ist es, neben dem Katalysatorgemisch noch Dialkylaminopyridine als Cokatalysator einzusetzen.

Besonders geeignete Dialkylaminopyridine sind solche mit 1 bis 10 C-Atomen in der Alkylgruppe. Bevorzugt verwendet werden 4-Dimethylaminopyridin, 4-Dibutylaminopyridin, 4-Piperidinylpyridin, die gegebenenfalls zusammen mit dem Aminostickstoff einen Pyrrolidin- oder Piperidinring bilden können.

Sofern ein Cokatalysator benutzt wird, wird er in einer Menge von 0,05 bis 4 Mol-%, vorzugsweise von 0,2 bis 2 Mol-% - bezogen auf die Summe der Komponenten A. und B. - eingesetzt. In besonders bevorzugten Fällen wird der Cokatalysator in einer äquivalenten Menge zu dem Katalysatorgemisch in die Reaktionsmischung zugegeben.

Die Reaktion wird in der Schmelze bei Temperaturen im Bereich von 200 bis 400 °C, vorzugsweise von 230 bis 360 °C durchgeführt.

Üblicherweise wird unter Inertgas bei Normaldruck gearbeitet. Es kann jedoch auch bei Über- bzw. Unterdruck gearbeitet werden.

Zur Erhöhung des Molekulargewichtes können die aromatischen Polyamide einer Festphasennachkondensation in einer Inertgasatmosphäre unterzogen werden.

Das Gemisch aus Polyamid und erfindungsgemäßer Verbindung kann auf üblichen Maschinen durch Spritzguß oder Extrusion zu den erfindungsgemäßen Formmassen verarbeitet werden.

Die Formmassen können zusätzlich noch Füllstoffe, wie Talkum, oder Verstärkungsmittel, wie Glas-, ARAMID$^R$- oder Kohlefasern, sowie andere übliche Zusätze, wie z. B. Pigmente oder Stabilisatoren, enthalten.

Die Formmassen werden nach üblichen Verfahren wie Spritzguß, Extrusion o. ä. zu Formteilen, Fasern, Folien usw. verarbeitet. Ebenso ist die Verwendung als Beschichtungsmittel ausgehend vom Pulver (z. B. Wirbelsinterverfahren), einer flüssigen Dispersion oder einer Lösung möglich.

Die erfindungsgemäßen Formmassen weisen eine unerwartet hohe Temperaturstabilität auf. Eine Verarbeitung der Produkte kann noch bei Temperaturen > 340 °C erfolgen, ohne daß eine Abnahme des Molekulargewichtes oder eine Braunfärbung eintritt. Ferner zeigen erfindungsgemäß erhaltene Formmassen eine hervorragende Stabilität gegenüber Thermooxidation, so daß sie noch bei deutlich höheren Temperaturen als entsprechende Massen des Standes der Technik eingesetzt werden können. Zu diesen Eigenschaften hinzuzurechnen ist eine gute Wärmestandfestigkeit, d. h. Formmassen, welche die erfindungsgemäßen aromatischen Polyamide zur Basis haben, können über lange Zeiträume hohen Temperaturen ausgesetzt werden, ohne daß ein deutlicher Verlust bei den mechanischen Eigenschaften auftritt. Darüber hinaus ist eine ausgezeichnete, den praktischen Erfordernissen entsprechende Schmelzviskosität festzustellen, die deutlich unterhalb derjenigen von anderen, ähnlich aufgebauten Massen des Standes der Technik liegt.

Die in der Beschreibung und in den Beispielen genannten Parameter wurden mit Hilfe nachstehender Verfahren bestimmt.

Der Glaspunkt ($T_g$) wurde durch DSC bei einer Aufheizrate von 10 °C/min. bestimmt.

Die Viskositätszahlen (J) wurden an 0,5 Gew.-%igen Lösungen der Polyamide in einem Phenol/o-Dichlorbenzol-Gemisch (1 : 1 Gewichtsteile) bei 25 °C nach DIN 53 728 bestimmt.

Die Schmelzviskosität (MVI-Wert) wurde nach DIN 53 735-MFI-B einen Göttfert-Viskosimeter bei 320 °C und 21,6 Kp Last gemessen.

Mit Buchstaben gekennzeichnete Beispiele sind nicht erfindungsgemäß.-

## Beispiele

### Beispiel A:

21,62 g (0,05 Mol) 4,4'-Bis(4-aminophenoxy)diphenylsulfon und 8,31 g (0,05 Mol) Isophthalsäure wurden mit 82 mg (0,001 Mol) Phosphoriger Säure und 122 mg (0,001 Mol) 4-Dimethylaminopyridin in einem Rührkolben mit Rührer, Stickstoffeinleitung und Destillationsbrücke 20 Minuten bei 250 °C, 10 Minuten bei

300 °C und 10 Minuten bei 320 °C polykondensiert. Im Verlauf der Reaktion wurde das bei der Polykondensation abgespaltene Wasser abdestilliert. Der J-Wert betrug 34 $cm^3/g$. Durch Festphasennachkondensationbei 250 °C wurde ein J-Wert von 54 $cm^3/g$ erreicht. Der MVI-Wert betrug 5 $cm^3/10$ min.

<u>Beispiel 1</u>

Gemäß Beispiel A hergestelltes Polyamid wurde mit Triphenylphosphat im Gewichts-Verhältnis 90 : 10 60 Minuten bei 320 °C unter Stickstoffabdeckung gemischt. Man erhielt ein homogenes Compound, das eine deutlich verringerte Schmelzviskosität aufwies.

J = 64 $cm^3/g$
MVI-Wert = 27 $cm^3/10$ min

<u>Beispiele 2 und 3</u>

Die Beispiele 2 und 3 wurden analog Beispiel 1 durchgeführt, wobei die erfindungsgemäßen Verbindungen und deren Anteil gemäß nachstehender Tabelle variiert wurden.

| Beispiel | Verbindung | Menge [Gew-%]**) | J [$cm^3/g$] | MVI-Wert [$cm^3/10$ min] |
|---|---|---|---|---|
| 2 | TPP*) | 20 | 68 | 33 |
| 3 | TPP | 30 | 77 | 53.4 |

*) TPP = Triphenylphosphat
**) bezogen auf die Formmasse (= 100 Gew.-%)

**Patentansprüche**

1. Formmasse auf Basis eines thermoplastisch verarbeitbaren, aromatischen Polyamids erhalten durch Polykondensieren nachstehender Ausgangsmonomeren:

A. HOOC - Ar - COOH

B. $H_2N$ - Ar' - $NH_2$

hierbei bedeutet
Ar: 1.3-oder 1.4-Phenylen; 1.4-, 1.5-, 2.6- oder 2.7-Naphthylen,

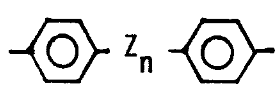

oder

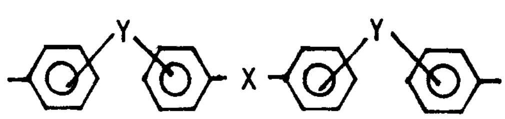 ;

Ar':

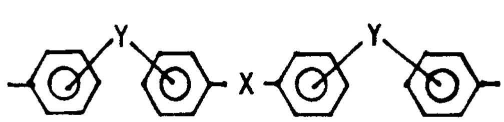 ;

X: $-SO_2-$; -CO-;
Y: -O-; -S-;
Z: -O-; -S-; $-SO_2-$; -CO-; $-CR_2-$;
R: -H; $C_1$ - $C_4$-Alkyl;
n: 0; 1;

in der Schmelze in Gegenwart eines Katalysators bei Temperaturen im Bereich von 200 bis 400 °C,

dadurch gekennzeichnet,
daß die Formmasse Verbindungen der allgemeinen Formel

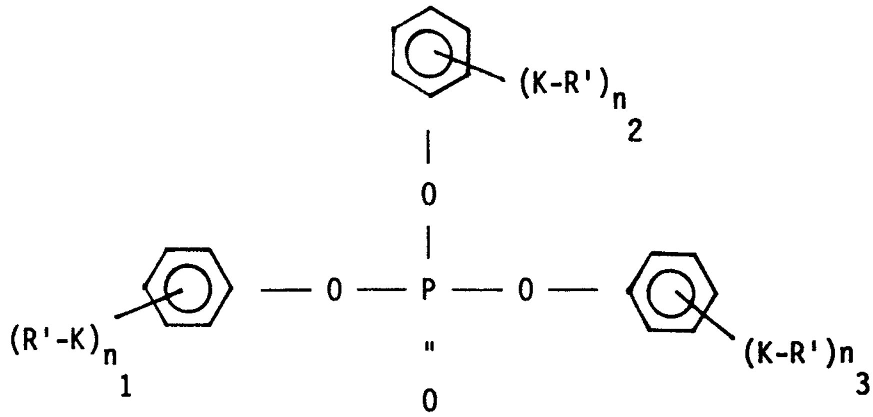

K: -S-; -SO-; $-SO_2-$;
-O-; -CO-; $-CR''_2-$;
R': -H; $-C_pH_{2p-1}$;

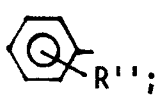 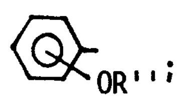

R'': -H; $-C_pH_{2p+1}$;
$n_1$, $n_2$, $n_3$: 0; 1, wobei $n_1$ bis $n_3$ gleich oder verschieden sein können;
p: 1 - 10

enthält.

2. Formmasse nach Anspruch 1,
dadurch gekennzeichnet,
daß Triphenylphosphat eingesetzt wird.

3. Formmasse nach den Ansprüchen 1 und 2,
dadurch gekennzeichnet,
daß sie 99,5 - 60 Gew.-% aromatisches Polyamid enthält.

4. Formmasse nach den Ansprüchen 1 und 2,
dadurch gekennzeichnet,
daß sie 98 - 70 Gew.-% aromatisches Polyamid enthält.

Europäisches Patentamt

# EUROPÄISCHER RECHERCHENBERICHT

Nummer der Anmeldung

EP 91 12 1566

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | DE-A-3 609 011 (HÜLS AG)<br>* Anspruch 1 *<br>----- | 1 | C 08 K 5/523<br>C 08 L 77/10 |
| | | | **RECHERCHIERTE SACHGEBIETE (Int. Cl.5)** |
| | | | C 08 K<br>C 08 L |

Der vorliegende Recherchenbericht wurde für alle Patentansprüche erstellt

| Recherchenort | Abschlußdatum der Recherche | Prüfer |
|---|---|---|
| DEN HAAG | 18-05-1992 | SCHUELER D.H.H. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)